# FASCICULE DE BREVET EUROPEEN

(11) **EP 2 872 317 B1**
(45) Date de publication et mention de la délivrance du brevet: **27.04.2016**
(21) Numéro de dépôt: 13744646.4
(22) Date de dépôt: 27.06.2013
(51) Int. Cl.: B32B 3/12, F23M 5/04, F27D 1/10

(54) **PROCEDE DE REALISATION D'UN REVETEMENT ANTI EROSION SUR UNE PAROI INTERNE D'UNE ENCEINTE D'UNITE FCC ET STRUCTURE D'ANCRAGE POUR LA REALISATION DE CE REVETEMENT**
VERFAHREN ZUR HERSTELLUNG EINER EROSIONSSCHUTZBESCHICHTUNG AUF DER INNENWAND EINER VERBRENNUNGSKAMMER EINER FCC-ANLAGE UND VERANKERUNGSSTRUKTUR ZUR HERSTELLUNG DIESER BESCHICHTUNG
METHOD FOR PRODUCING AN ANTI-EROSION COATING ON AN INNER WALL OF A CHAMBER OF AN FCC UNIT, AND ANCHORING STRUCTURE FOR PRODUCING SAID COATING

(30) Priorité: 10.07.2012 FR 1256622
(43) Date de publication de la demande: 20.05.2015
(73) Titulaire: TOTAL RAFFINAGE CHIMIE, 92400 Courbevoie (FR)
(72) Inventeur: SIMON, Hubert, F-76120 Le Havre (FR); BORIES, Marc, 44600 Saint-Nazaire (FR)
(74) Mandataire: Largeau, Béatrice
(86) Numéro de dépôt international: PCT/FR2013/051503
(87) Numéro de publication internationale: WO 2014/009625

(56) Documents cités:
- EP-A1- 0 180 553
- US-A1- 2004 226 251
- US-A1- 2004 229 001
- US-B1- 6 393 789

## Description

L'invention concerne un procédé de réalisation d'un revêtement anti érosion sur une paroi interne ou externe d'une enceinte d'unité de craquage catalytique fluide (FCC « Fluid Catalytic Cracking » en anglais).

L'invention concerne en particulier un procédé de réalisation d'un revêtement anti érosion sur une paroi de cyclone, de plénum ou de désengageur faisant partie d'une unité de craquage catalytique fluide.

L'invention concerne également une structure d'ancrage adaptée pour réaliser un revêtement anti-érosion avec le procédé selon l'invention.

Le craquage catalytique en lit fluidisé (FCC) est un procédé chimique, fréquemment utilisé dans les raffineries de pétrole, dont le but est de transformer les coupes lourdes à longues chaînes d'hydrocarbures, par exemple issues de la distillation sous vide du pétrole, en coupes plus légères et plus valorisables. Une haute température associée à la présence d'un catalyseur spécifique, une légère surpression par rapport à la pression atmosphérique, permet de craquer (casser) les grosses molécules hydrocarbonées pour produire de plus petites molécules présentant une valorisation importante, par exemple dans la chaîne de fabrication des produits pétroliers.

Le catalyseur généralement utilisé est une zéolithe avec des substitutions cationiques de terres rares maintenues au sein d'une matrice silice-alumine amorphe. Grâce aux dimensions extrêmement faibles de ses grains (de l'ordre d'une cinquantaine de microns) ce catalyseur peut être mis en mouvement « fluide » ou « quasi-fluide » dans la zone réactionnelle du FCC.

Dans le processus FCC, la charge à traiter et le catalyseur sont introduits ensemble dans un réacteur dont la température peut atteindre plusieurs centaines de degrés centigrades, par exemple de 520°C à 550°C. Les effluents gazeux sortant du réacteur et formés au cours de la réaction chimique sont séparés des particules de catalyseur solide et coké dans un désengageur situé en aval du réacteur. Un ou plusieurs cyclones disposés dans le désengageur peuvent compléter la séparation des particules de catalyseur et des effluents gazeux.

La réaction chimique produite dans le réacteur du FCC entraîne la formation de dépôts de coke sur les particules de catalyseur. Ceci impose une régénération permanente de ce catalyseur. C'est à cet effet qu'il est prévu dans le FCC, et en continu, un écoulement du catalyseur coké vers un régénérateur dans lequel est soufflé de l'air de combustion à une température d'environ 200/220°C, pour brûler le coke. Les températures internes du régénérateur utilisées pour brûler le coke sont de l'ordre de 720 à 760°C. Le catalyseur chaud ainsi régénéré, pouvant être assimilé à un catalyseur neuf, est ensuite réinjecté à l'entrée du réacteur avec la charge fraîche.

C'est ce mouvement continu et fluide de régénération du catalyseur qui donne son nom au procédé FCC.

Bien que le catalyseur débarrassé de son coke soit évacué en continu en partie basse du régénérateur, il subsiste des quantités non négligeables de particules solides dudit catalyseur entraînées en sortie haute dudit régénérateur par le gaz de combustion contenant notamment du gaz carbonique (CO₂), de l'azote (N₂), de l'oxyde de carbone (CO), des oxydes d'azote (NOx) et des oxydes de soufre (SOx), voire de l'oxygène (O₂). Ce gaz de combustion est ensuite traité par différents moyens dans des unités de récupération d'énergie pour notamment abaisser sa température, puis est éjecté par une cheminée. Il est extrêmement important que les particules de catalyseur soient absentes quasi-totalement, voire totalement de ce gaz de combustion, ce qui requiert la présence en sortie haute du régénérateur d'un dispositif adapté de séparation et de récupération de ces particules. De la même manière que dans le réacteur et pour la séparation des particules de catalyseur avec les effluents gazeux formés pendant la réaction de craquage, c'est au moins un étage de cyclones qui est utilisé dans le régénérateur, de préférence deux étages de cyclones primaires et secondaires installés en série pour séparer et récupérer les particules de catalyseur contenues dans le gaz de combustion.

Les parois métalliques du désengageur, du régénérateur et des équipements internes situés dans le régénérateur ou le désengageur, en particulier les cyclones, peuvent subir une érosion due à la circulation des particules de catalyseur, et, au niveau du régénérateur, une corrosion massive et rapide par les gaz de combustion. Il est donc nécessaire de les protéger afin d'allonger leur durée de vie.

Les parois métalliques des enceintes et des équipements internes à ces enceintes d'une unité de craquage catalytique sont ainsi recouvertes d'un revêtement destiné à les protéger principalement de l'érosion. De tels revêtements sont généralement constitués d'un matériau composite, par exemple un béton, maintenu par une structure d'ancrage, le plus souvent métallique. Ces structures d'ancrage sont soudées aux parois métalliques et assurent ainsi l'accrochage du matériau composite. Elles peuvent présenter une forme de nid d'abeille comportant une pluralité d'alvéoles hexagonales solidaires les unes des autres par leur côté. La structure d'ancrage est alors soudée à la paroi métallique par soudage d'une partie seulement des alvéoles à la paroi métallique. Habituellement, une alvéole sur quatre est soudée à la paroi métallique. Chaque alvéole est ensuite remplie de matériau composite. Cette configuration du revêtement permet également d'assurer l'absorption des différences de dilatation existant entre la structure d'ancrage métallique et le matériau composite.

Certaines structures d'ancrage en nid d'abeille existantes consistent en des bandes assemblées deux à deux. Chaque bande est divisée suivant sa longueur en une pluralité de portions, des premières portions de bande s'étendant dans un premier plan parallèle à la direction longitudinale de la bande, des deuxièmes portions de bande s'étendant dans un deuxième plan parallèle au premier plan et distinct de celui-ci, des troisièmes portions de bande reliant chacune une première portion de bande à une deuxième portion de bande. Les premières et deuxièmes portions de bande sont alternées sur toute la longueur de la bande. Pour la réalisation d'une structure d'ancrage de ce type, les premières portions d'une bande sont juxtaposées et assemblées aux deuxièmes portions d'une bande adjacente par des moyens de fixation de manière à former des alvéoles. Chaque alvéole est ainsi délimitée par une première portion d'une bande et ses deux troisièmes portions adjacentes et par la deuxième portion de la bande juxtaposée et ses deux troisièmes portions adjacentes. Les moyens de fixation sont par exemple des rivets, des goupilles, des agrafes ou des moyens de fixation similaires traversant des orifices des bandes à assembler. Actuellement, les différentes spécifications imposent un jeu maximal de l'ordre de 0,2 mm entre deux portions de bandes assemblées.

Les parois des enceintes et des équipements internes à ces enceintes à recouvrir étant souvent cylindriques, ces structures d'ancrage doivent être mises en forme, par exemple par roulage, afin de présenter un rayon de courbure adapté à la paroi sur laquelle elles doivent être fixées.

Un tel revêtement permet de protéger les parois métalliques des unités FCC. On observe cependant au cours du temps, une dégradation de ce revêtement qui peut conduire à une chute de morceaux de revêtement à l'intérieur des enceintes ou des équipements internes et nécessiter l'arrêt de l'installation pour le remplacement du revêtement.

Les dégradations observées peuvent avoir plusieurs origines selon les conditions de fonctionnement de l'enceinte concernée.

Le désengageur ou les cyclones situés dans le désengageur sont en contact avec les gaz issus du craquage de la charge. Ces gaz, s'introduisent entre les interstices du revêtement et conduisent à la formation de coke à l'intérieur de ces interstices, et plus particulièrement au niveau de la jonction de deux bandes juxtaposées de la structure d'ancrage. Cette formation de coke peut entraîner un décollement important du revêtement lors des cycles successifs de refroidissement/réchauffage de l'enceinte : les jeux existant entre le matériau composite et sa structure d'ancrage sont en effet comblés par le coke de sorte que ces jeux de retrait ne peuvent plus jouer leur rôle consistant à absorber les différences de dilatation entre la structure d'ancrage et le matériau composite. Il en résulte la formation de lignes de compression, de fissures, voire un décollement du matériau composite remplissant les alvéoles de la structure d'ancrage.

Dans un régénérateur ou dans les équipements internes d'un régénérateur, notamment les cyclones, les parois métalliques sont en contact avec des particules de catalyseur et avec un gaz contenant entre autres, de l'oxygène, des oxydes de carbone, de soufre et d'azote. Ce gaz pénètre par les interstices du revêtement et provoque des phénomènes de sulfuration, carburation et oxydation, en particulier au niveau des soudures fixant la structure d'ancrage métallique aux parois métalliques.

Quelques soient les phénomènes de dégradation observés, corrosion, notamment par sulfuration, carburation, oxydation, ou formation de coke, la demanderesse a constaté que ces phénomènes surviennent essentiellement au niveau de la structure d'ancrage métallique et/ou de sa liaison par soudure aux parois métalliques, et plus particulièrement au niveau des portions de bandes juxtaposées de la structure d'ancrage solidarisées par les moyens de fixation.

Le document EP 180 553 décrit également qu'un phénomène de corrosion et d'érosion est souvent observé au niveau des espaces situés entre les portions de bande juxtaposées, ces espaces étant créés par les déformations résultant de la mise en forme selon un cylindre ou similaire de la structure d'ancrage en nid d'abeille. Une corrosion / érosion est observée au niveau de ces espaces car le matériau composite peut difficilement y pénétrer. Afin de remédier à ce problème, le document EP 180 553 propose de réaliser des découpes en forme d'Oméga Ω sur les portions de bandes qui ne sont pas juxtaposées à une autre bande adjacente. Ces découpes en forme d'Oméga sont disposées de manière à déboucher sur le bord inférieur et sur le bord supérieur de la portion de bande concernée. De telles découpes facilitent la mise en forme de la structure en nid d'abeille et évitent la formation de ces espaces au niveau desquels une corrosion/érosion est observée.

Si la structure d'ancrage décrite dans le document EP 180 553 permet de réaliser un revêtement renforcé dans lequel les espaces entre les bandes formant la structure d'ancrage sont de petite dimension ou inexistants, les gaz environnant peuvent toutefois toujours pénétrer entre les bandes de la structure et provoquer une corrosion/formation de coke au niveau des interstices existant entre les bandes de la structure d'ancrage et la paroi métallique à laquelle la structure d'ancrage est soudée.

Le document CA632486 décrit une structure d'ancrage en nid d'abeille formée de bandes juxtaposées, dans laquelle les hauteurs des portions de bande juxtaposées et assemblées ne sont pas les mêmes, de sorte que, lorsque le matériau composite remplit les alvéoles, il recouvre la hauteur de bande la plus faible ce qui permet de limiter l'introduction de liquide corrosif entre les deux bandes au niveau de leur juxtaposition. La corrosion induite par les gaz environnants n'est pas mentionnée.

Il existe donc un besoin d'un revêtement plus résistant aux phénomènes de dégradation, en particulier à la corrosion, notamment par sulfuration, carburation, oxydation, ou formation de coke.

L'invention vise à pallier ces inconvénients en proposant un procédé de réalisation d'un revêtement anti érosion sur une paroi métallique interne ou externe d'une enceinte d'unité de craquage catalytique fluide, comprenant :
- (i) la mise en forme d'une structure d'ancrage métallique en nid d'abeille, ladite structure d'ancrage étant formée d'une pluralité de bandes assemblées deux à deux de manière à former une pluralité d'alvéoles entre deux bandes adjacentes, dans laquelle chaque bande est divisée suivant sa longueur en une pluralité de portions, dont au moins une série de portions d'assemblage s'étendant dans un même plan et assemblées à une série de portions d'assemblage d'une bande adjacente par des moyens de fixation, chaque bande présentant un bord longitudinal inférieur contenu dans un unique plan avant mise en forme et un bord longitudinal supérieur, lors de cette étape de mise en forme, les bords longitudinaux inférieurs des bandes de ladite structure d'ancrage étant conformés pour épouser la forme de ladite paroi métallique,
- (ii) la fixation de ladite structure d'ancrage sur ladite paroi métallique, les bords longitudinaux inférieurs des bandes de la structure d'ancrage étant en contact avec la paroi métallique,
- (iii) l'insertion d'un matériau composite dans les alvéoles de ladite structure d'ancrage depuis la paroi métallique et au moins jusqu'au bord longitudinal supérieur de chaque bande,
dans lequel l'étape (ii) de fixation de la structure d'ancrage à la paroi métallique est réalisée par soudage sur la paroi métallique d'au moins une partie des bords longitudinaux inférieurs des bandes de sorte que chaque alvéole de la structure d'ancrage soit soudée à la paroi métallique au moins aux jonctions entre les portions d'assemblage jointives de deux bandes adjacentes.

Le procédé de réalisation d'un revêtement selon l'invention permet d'installer facilement une barrière s'opposant à la progression et au renouvellement des espèces gazeuses dans les espaces de confinement séparant les portions jointives des bandes formant la structure d'ancrage. La capacité d'adaptation et de flexibilité en termes de dilatation respective du matériau composite et de la structure métallique peut ainsi être conservée. En outre, les processus de fabrication, mise en forme et installation de la structure d'ancrage sur les parois métalliques à protéger sont identiques aux processus existants. Enfin, l'installation du matériau composite (généralement à la main) reste également inchangée par rapport à l'utilisation des structures d'ancrage existantes.

Le fait que chaque alvéole de la structure d'ancrage soit soudée à la paroi de l'enceinte, en particulier aux jonctions entre les portions d'assemblage de deux bandes adjacentes de la structure d'ancrage, permet notamment de réduire les risques de pénétration de gaz corrosif jusqu'à la jonction entre la structure d'ancrage et la paroi d'enceinte, entre deux bandes adjacentes de la structure d'ancrage, limitant ainsi la corrosion au niveau de cette jonction.

La réalisation d'un bord longitudinal inférieur contenu dans un unique plan pour chaque bande de la structure d'ancrage avant l'étape de mise en forme, permet de faciliter la soudure de ce bord longitudinal à une paroi métallique.

Avantageusement, au moins une des soudures réalisées au cours de l'étape (ii) à la jonction des portions d'assemblages jointives de deux bandes adjacentes, s'étend sur toute la longueur d'au moins une des portions de bande adjacente aux portions d'assemblage. Ceci peut permettre de réduire davantage les risques d'introduction de gaz corrosif entre le système d'ancrage et la paroi métallique au niveau des jonctions de deux bandes adjacentes.

La structure en nid d'abeille utilisée dans le procédé selon l'invention est avantageusement réalisée en acier inoxydable (un acier inoxydable contient au plus 1,2% en poids de carbone et au moins 10,5% en poids de chrome selon la norme EN10008). En particulier, l'acier inoxydable sera choisi de manière à résister à l'environnement de l'enceinte dans laquelle la structure d'ancrage doit être utilisée.

Dans certaines applications, par exemple en revêtement dans des cyclones de régénérateur, il a été observé des dégradations sérieuses de l'acier inoxydable utilisé pour des structures en nid d'abeille.

Il semblerait que sous la couche externe d'oxyde de chrome, la teneur en chrome de l'acier diminue en cours d'utilisation jusqu'à atteindre une valeur inférieure à 10,5% en poids. Or, un acier perd son caractère inoxydable lorsque sa teneur en chrome est inférieure à 10,5% en poids : une oxydation rapide de l'acier peut alors survenir.

En outre, la formation de carbures a également été observée et semble avoir été la cause de microfissures à l'intérieur de l'acier.

Afin d'éviter ou de limiter ce type de dégradation, les bandes de la structure d'ancrage utilisée à l'étape (i) peuvent avantageusement être réalisées en acier inoxydable austénitique choisi parmi les aciers suivants :
- un acier inoxydable contenant de 0,04 à 0,10% en poids de carbone, de 17 à 19% de chrome et de 9 à 12% de nickel, et avec une teneur en niobium comprise de 8 fois la teneur en carbone à 1% en poids, par exemple un acier de grade AISI 347,
- un acier contenant au plus 0,015% en poids de carbone, de 15 à 17% de chrome et de 33 à 37% de nickel, par exemple un acier de grade AISI 330,
- un acier contenant au plus 0,10% en poids de carbone, de 24 à 26% de chrome et de 19 à 22% de nickel, par exemple un acier de grade AISI 310.

Avantageusement et de manière non limitative, la structure d'ancrage utilisée à l'étape (i) est telle que le bord longitudinal supérieur de chaque bande est formé d'une succession de tronçons rectilignes et parallèles au bord longitudinal inférieur, le bord longitudinal supérieur comprenant en alternance des tronçons bas distants du bord longitudinal inférieur d'une distance h et des tronçons hauts distants du bord longitudinal inférieur d'une distance H supérieure à la distance h, au moins une partie des tronçons bas formant le bord supérieur d'une partie au moins des portions d'assemblage de telle sorte que, lorsque deux bandes adjacentes sont assemblées, chaque portion d'assemblage d'une bande comporte un bord longitudinal supérieur distant de son bord longitudinal inférieur d'une distance différente de la distance séparant le bord longitudinal supérieur du bord longitudinal inférieur de la portion d'assemblage de la bande adjacente à laquelle elle est assemblée, sur toute la longueur des portions d'assemblage assemblées.

Au cours de l'étape d'insertion (iii) du matériau composite dans les alvéoles de ladite structure d'ancrage, le matériau composite remplit alors les alvéoles depuis la paroi métallique et au moins jusqu'aux tronçons hauts des bords longitudinaux supérieurs des bandes de la structure d'ancrage. Un tel recouvrement de la structure d'ancrage par un matériau composite jusqu'à la hauteur H des tronçons hauts du bord longitudinal supérieur, au dessus de la hauteur h des tronçons bas du bord longitudinal supérieur, peut permettre d'empêcher la pénétration d'un fluide, en particulier d'un gaz, entre les portions d'assemblage des bande juxtaposées, tout en permettant l'obtention d'une structure d'ancrage possédant des propriétés mécaniques homogènes sur toute sa surface du fait de l'alternance des tronçons hauts et bas, de sorte que les contraintes engendrées par sa mise en forme seront homogènes.

Avantageusement et de manière non limitative, chaque bande de la structure d'ancrage utilisée à l'étape (i) est telle que la différence H-h entre les distances H et h est de 4 à 10 mm de préférence de 6 à 8 mm. Une telle différence des distances est généralement suffisante pour permettre un recouvrement par un matériau composite de l'espace existant entre les portions de deux bandes adjacentes juxtaposées et assemblées, et empêcher ainsi la pénétration d'un fluide dans cet espace.

Avantageusement et de manière non limitative, toutes les bandes de la structure d'ancrage utilisée à l'étape (i) sont identiques. Ceci peut permettre l'obtention d'une structure d'ancrage possédant des propriétés mécaniques particulièrement homogènes sur toute sa surface du fait de l'utilisation de bandes identiques, de sorte que les contraintes engendrées par sa mise en forme seront particulièrement homogènes et que la structure d'ancrage obtenue présentera une bonne déformabilité. L'utilisation de bandes identiques permet également de réduire les coûts de fabrication par rapport aux structures d'ancrage comportant des pièces différentes, ou une ou deux pièces pour former chaque alvéole tel que décrit par exemple dans le document CA632486.

Dans un premier mode de réalisation décrit dans ce document CA632486, une bande sur deux présente une hauteur plus faible sur chaque portion destinée à être juxtaposée et assemblée à une bande adjacente, les autres bandes présentant une hauteur uniforme sur toute leur longueur. Cette configuration peut toutefois rendre plus difficile la mise en forme de la structure d'ancrage par roulage et engendrer la formation de contraintes différentes au sein du métal lors de la mise en forme de la structure. Dans d'autres modes de réalisation décrits dans ce document CA632486, chaque alvéole est formée d'une bande ou de deux bandes, ce qui nécessite la réalisation et l'assemblage de très nombreuses pièces pour la formation d'une structure d'ancrage formée d'une pluralité d'alvéoles.

Avantageusement et de manière non limitative, la paroi métallique sur laquelle est appliqué le revêtement est une paroi interne ou externe d'un cyclone, d'un régénérateur, d'un désengageur ou de tout autre équipement interne d'une unité de craquage catalytique fluide

Le matériau composite, au sens de la présente invention, est de préférence un matériau résultant d'un assemblage d'au moins deux matériaux non miscibles possédant une forte capacité d'adhésion. De préférence, le matériau composite est un matériau de construction composite tel qu'un béton, en particulier un béton adapté à une utilisation dans une unité de craquage catalytique fluide.

Selon un mode de réalisation particulier du procédé selon l'invention, chaque bande de la structure d'ancrage utilisée à l'étape (i) peut être divisée suivant sa longueur en une pluralité de portions, des premières portions de bande s'étendant dans un premier plan parallèle à la direction longitudinale (L) de la bande, des deuxièmes portions de bande s'étendant dans un deuxième plan parallèle au premier plan et distinct du premier plan, des troisièmes portions de bande reliant chacune une première portion de bande à une deuxième portion de bande, les premières et deuxièmes portions de bande étant alternées sur toute la longueur de la bande et les premières portions d'une bande étant juxtaposées et assemblées aux deuxièmes portions d'une bande adjacente par des moyens de fixation de manière à former des alvéoles hexagonales.

Une telle forme hexagonale des alvéoles permet de réaliser une structure d'ancrage particulièrement résistante. En outre, l'assemblage de deux bandes permet l'obtention d'une pluralité d'alvéoles.

La structure d'ancrage de ce mode de réalisation particulier peut alors présenter une des configurations suivantes, particulièrement simple à réaliser :
- les tronçons bas peuvent s'étendre sur toute la longueur de chaque première portion et les tronçons hauts peuvent s'étendre sur toute la longueur de chaque deuxième portion, ou
- les tronçons bas peuvent s'étendre sur toute la longueur de chaque deuxième portion, et les tronçons hauts peuvent s'étendre sur toute la longueur chaque première portion.

De manière générale et avantageuse, pour chaque bande de la structure d'ancrage utilisée à l'étape (i) du procédé selon l'invention, le bord longitudinal supérieur de chaque portion d'assemblage est identique et formé d'une succession d'au moins un tronçon haut et d'au moins un tronçon bas, toutes les bandes de la structure d'ancrage étant identiques, ce qui peut permettre de simplifier la réalisation de la bande.

En particulier, le bord longitudinal supérieur de chaque portion d'assemblage (par exemple d'une première et d'une deuxième portion), peut être formé d'un seul tronçon haut et d'un seul tronçon bas. Les deux tronçons haut et bas d'une portion d'assemblage (par exemple d'une première ou deuxième portion) peuvent être de même longueur ou de préférence de longueur différente, ce qui permet d'éviter tout chevauchement entre les tronçons hauts des portions d'assemblage assemblées de deux bandes juxtaposées. Un chevauchement pourrait en effet favoriser l'introduction de gaz entre les portions assemblées, ce qui n'est pas souhaitable.

Avantageusement et de manière non limitative, le bord longitudinal supérieur des portions de bande (par exemples des troisièmes portions de bande du mode de réalisation particulier), situées entre les portions d'assemblage des bandes, est distant du bord longitudinal inférieur de la distance H.

Avantageusement, le bord longitudinal supérieur de chaque bande peut présenter des jonctions arrondies entre les tronçons hauts et les tronçons bas. Ceci permet d'éviter des blessures lors de la manipulation de ces structures d'ancrage, et notamment lors de leur remplissage manuel pour leur utilisation dans des enceintes d'unités de craquage catalytique fluide.

Avantageusement et de manière non limitative, une languette de matière peut être découpée d'au moins une portion autre qu'une portion d'assemblage (par exemple d'une troisième portion de bande du mode de réalisation particulier) et pliée afin de saillir de cette portion. Une telle configuration peut permettre d'améliorer l'ancrage du matériau composite sur la structure d'ancrage, la languette étant alors noyée dans le matériau composite, dont le maintien est également renforcé du fait qu'il traverse l'orifice libéré par la languette repliée.

Les languettes de matière issues de portions faisant partie d'une même alvéole peuvent être repliées l'une vers l'autre. Cet agencement permet d'obtenir deux languettes repliées vers le centre de chaque alvéole lorsque les bandes sont assemblées les unes aux autres.

Ces languettes peuvent également être repliées de manière à s'étendre sensiblement parallèlement aux plans des portions d'assemblage de bande.

Les différentes configurations décrites ci-dessus sont particulièrement avantageuses lorsque toutes les bandes de la structure d'ancrage sont identiques.

L'invention concerne également une structure d'ancrage métallique en nid d'abeille pour la réalisation d'un revêtement anti érosion sur une paroi métallique interne ou externe d'une enceinte d'unité de craquage catalytique fluide. Cette structure d'ancrage est formée d'une pluralité de bandes identiques assemblées deux à deux de manière à former une pluralité d'alvéoles entre deux bandes adjacentes, dans laquelle chaque bande est divisée suivant sa longueur en une pluralité de portions, dont au moins une série de portions d'assemblage s'étendant dans un même plan et assemblées à une série de portions d'assemblage d'une bande adjacente par des moyens de fixation, chaque bande présentant un bord longitudinal inférieur contenu dans un unique plan et un bord longitudinal supérieur. Le bord longitudinal supérieur de chaque bande est formé d'une succession de tronçons rectilignes et parallèles au bord longitudinal inférieur, le bord longitudinal supérieur comprenant en alternance des tronçons bas distants du bord longitudinal inférieur d'une distance h et des tronçons hauts distants du bord longitudinal inférieur d'une distance H supérieure à la distance h, au moins une partie des tronçons bas formant le bord supérieur d'une partie au moins des portions d'assemblage de telle sorte que, lorsque deux bandes adjacentes sont assemblées, chaque portion d'assemblage d'une bande comporte un bord longitudinal supérieur distant de son bord longitudinal inférieur d'une distance différente de la distance séparant le bord longitudinal supérieur du bord longitudinal inférieur de la portion d'assemblage de la bande adjacente à laquelle elle est assemblée, sur toute la longueur des portions d'assemblage assemblées.

Ainsi, en tout point (suivant la direction longitudinale des bandes) de deux portions d'assemblage juxtaposées et fixées, la hauteur de ces portions est différente, ce qui garantit que les bords longitudinaux supérieurs des deux portions d'assemblage ne sont pas juxtaposés.

La configuration particulière de la structure d'ancrage selon l'invention présente l'avantage de permettre un recouvrement de la structure d'ancrage par un matériau composite jusqu'à la hauteur H des tronçons hauts du bord longitudinal supérieur d'une bande, au dessus de la hauteur h des tronçons bas du bord longitudinal supérieur d'une bande adjacente, de manière à empêcher la pénétration d'un gaz, entre les portions d'assemblage juxtaposées des deux bandes, tout en permettant l'obtention d'une structure d'ancrage possédant des propriétés mécaniques homogènes sur toute sa surface du fait de l'alternance des tronçons hauts et bas, de sorte que les contraintes engendrées par sa mise en forme seront homogènes.

En outre, la mise en forme de la structure d'ancrage selon l'invention pourra être réalisée avec les mêmes équipements que ceux utilisés pour des structures d'ancrage dont la hauteur de bande est identique sur toute la longueur de la bande, et en appliquant des forces similaires.

La réalisation d'un bord longitudinal inférieur contenu dans un unique plan (avant toute mise en forme de la structure d'ancrage) permet de faciliter la soudure de ce bord longitudinal à une paroi métallique d'enceinte.

Chaque bande étant réalisée en une seule partie (pas de fixation entre les différentes portions d'une même bande), la structure d'ancrage selon l'invention peut être réalisée avec un nombre réduit de pièces. L'assemblage de deux bandes comportant n portions d'assemblage chacune permet l'obtention de (n-1) alvéoles.

Les dimensions de la structure d'ancrage pourront être modulées en fonction du nombre de bandes assemblées et de leur longueur. Les moyens de fixation peuvent notamment consister en des languettes de matière découpées dans une première portion d'une bande et pénétrant dans un orifice correspondant d'une deuxième portion d'une bande juxtaposée. Ce type de fixation est par exemple décrit dans le document US 3 033 086. Dans le document IT 1195244, deux languettes d'une première portion d'une bande sont introduites dans un orifice d'une deuxième portion d'une bande adjacente, ces languettes étant ensuite plaquées contre cette deuxième bande.

Selon un mode de réalisation particulier, chaque bande de la structure d'ancrage peut être divisée suivant sa longueur en une pluralité de portions, des premières portions de bande s'étendant dans un premier plan parallèle à la direction longitudinale (L) de la bande, des deuxièmes portions de bande s'étendant dans un deuxième plan parallèle au premier plan et distinct du premier plan, des troisièmes portions de bande reliant chacune une première portion de bande à une deuxième portion de bande, les premières et deuxièmes portions de bande étant alternées sur toute la longueur de la bande et les premières portions d'une bande étant juxtaposées et assemblées aux deuxièmes portions d'une bande adjacente par des moyens de fixation de manière à former des alvéoles hexagonales.

Dans ce mode de réalisation particulier, les premières et deuxièmes portions de bande forment des portions d'assemblage.

En particulier, les tronçons bas peuvent alors s'étendre sur toute la longueur de chaque première portion et les tronçons hauts peuvent s'étendre sur toute la longueur de chaque deuxième portion, toutes les bandes de la structure d'ancrage étant identiques.

Quelque soit le mode de réalisation, la structure d'ancrage peut présenter une ou plusieurs des caractéristiques suivantes :
- le bord longitudinal supérieur de chaque portion d'assemblage de deux bandes adjacentes peut être avantageusement identique et formé d'une succession d'au moins un tronçon haut et d'au moins un tronçon bas ;
- le bord longitudinal supérieur des portions de bande situées entre les portions d'assemblage est distant du bord longitudinal inférieur de la distance H ;
- le bord longitudinal supérieur de chaque bande présente des jonctions arrondies entre les tronçons hauts et les tronçons bas ;
- la différence H-h entre les distances H et h est de 4 à 10 mm, de préférence de 6 à 8 mm,
- les bandes sont en acier inoxydable austénitique choisi parmi les aciers suivants :
   - un acier inoxydable contenant de 0,04 à 0,10% en poids de carbone, de 17 à 19% de chrome et de 9 à 12% de nickel, et avec une teneur en niobium comprise de 8 fois la teneur en carbone à 1% en poids,
   - un acier contenant au plus 0,015% en poids de carbone, de 15 à 17% de chrome et de 33 à 37% de nickel,
   - un acier contenant au plus 0,10% en poids de carbone, de 24 à 26% de chrome et de 19 à 22% de nickel.
- une languette de matière est découpée d'au moins une portion de bande autre qu'une portion d'assemblage et pliée afin de saillir de cette portion,
- les languettes de matière issues de portions faisant partie d'une même alvéole peuvent être repliées l'une vers l'autre.

Un autre objet de l'invention concerne un revêtement anti érosion comprenant une structure d'ancrage en nid d'abeille selon l'invention noyée dans un matériau composite, le matériau composite remplissant chaque alvéole depuis le bord longitudinal inférieur de chaque bande jusqu'au bord longitudinal supérieur sur une distance au moins égale à la distance H séparant les tronçons hauts du bord longitudinal inférieur.

Le matériau composite peut être tel que décrit plus haut en référence au procédé, par exemple un béton.

Un autre objet de l'invention concerne une enceinte d'une unité de craquage catalytique fluide comprenant au moins une paroi interne ou externe recouverte d'au moins un revêtement selon l'invention, le bord longitudinal inférieur de chaque bande de la structure d'ancrage du revêtement étant fixé par soudage sur la paroi interne ou externe de l'enceinte.

Cette enceinte peut être une enceinte d'un cyclone, d'un régénérateur, d'un désengageur ou de tout autre équipement interne d'une unité de craquage catalytique fluide.

Le soudage est avantageusement réalisé conformément à l'étape (ii) du procédé selon l'invention.

L'insertion de matériau composite est avantageusement réalisée conformément à l'étape (iii) du procédé selon l'invention.

L'invention est maintenant décrite en référence aux dessins annexés, non limitatifs, dans lesquels :
- la figure 1 est une représentation en perspective d'une structure d'ancrage selon un mode de réalisation de invention;
- la figure 2 est une représentation en perspective d'une structure d'ancrage selon un deuxième mode de réalisation de l'invention,
- la figure 3 est une représentation en perspective d'une structure d'ancrage selon un troisième mode de réalisation de l'invention,
- la figure 4 représente une vue de côté des bandes 12 formant la structure d'ancrage représentée figure 3, l'une des bandes 12 étant représentée en traits pleins, une autre bande 12 adjacente étant représentée en traits tiretés pour plus de clarté,
- la figure 5 est une représentation en coupe au niveau des portions assemblées de deux bandes adjacentes d'une structure d'ancrage fixée à une paroi métallique et noyée dans un matériau composite,
- la figure 6 représente un exemple de schéma de soudage d'une structure d'ancrage similaire à celles représentées sur les figures 1-3.

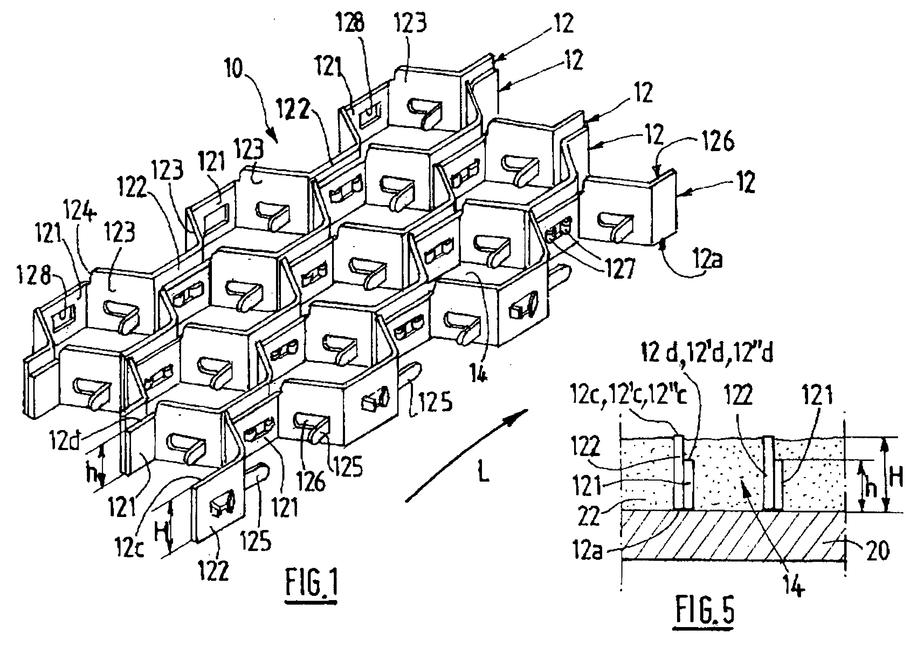

La figure 1 représente une structure d'ancrage 10 métallique en nid d'abeille formée d'une pluralité de bandes 12 assemblées deux à deux de manière à former une pluralité d'alvéoles hexagonales 14 reliées par leurs côtés les unes aux autres.

Les dimensions internes des alvéoles peuvent varier de 4 à 6 cm pour une épaisseur d'environ 1,5 à 3,0 cm.

Chaque bande 12, réalisée d'une pièce, est divisée suivant sa longueur en une pluralité de portions 121, 122, 123 :
- des premières portions 121 de bande qui s'étendant dans un premier plan parallèle à la direction longitudinale L de la bande,
- des deuxièmes portions 122 de bande qui s'étendent dans un deuxième plan parallèle au premier plan et distinct de celui-ci,
- des troisièmes portions 123 de bande qui relient chacune une première portion 121 de bande à une deuxième portion 122 de bande.

Les premières 121 et deuxièmes 122 portions de bande sont alternées sur toute la longueur d'une bande 12 et les premières portions 121 d'une bande sont juxtaposées et assemblées aux deuxièmes portions 122 d'une bande 12 adjacente par des moyens de fixation. Les premières 121 et deuxièmes 122 portions de bande forment des portions d'assemblage au sens de l'invention.

La structure d'ancrage 10 est formée d'une pluralité de bandes 12 identiques. Chaque bande 12 présente (avant toute mise en forme de la structure d'ancrage) un bord longitudinal inférieur 12a contenu dans un unique plan et un bord longitudinal supérieur 12b formé d'une succession de tronçons 12c et 12d rectilignes et parallèles au bord longitudinal inférieur 12a.

Le bord longitudinal supérieur 12b comprend en alternance des tronçons bas 12d distants du bord longitudinal inférieur 12a d'une distance h et des tronçons hauts 12c distants du bord longitudinal inférieur 12a d'une distance H supérieure à la distance h. Les tronçons 12c et 12d sont ainsi situés à des distances différentes du bord longitudinal inférieur 12a.

Dans l'exemple représenté figure 1, les tronçons hauts 12c s'étendent sur toute la longueur de chaque deuxième portion 122 de bande et de chaque troisième portion de bande 123. Les tronçons bas 12d s'étendent sur toute la longueur de chaque première portion 121 de bande.

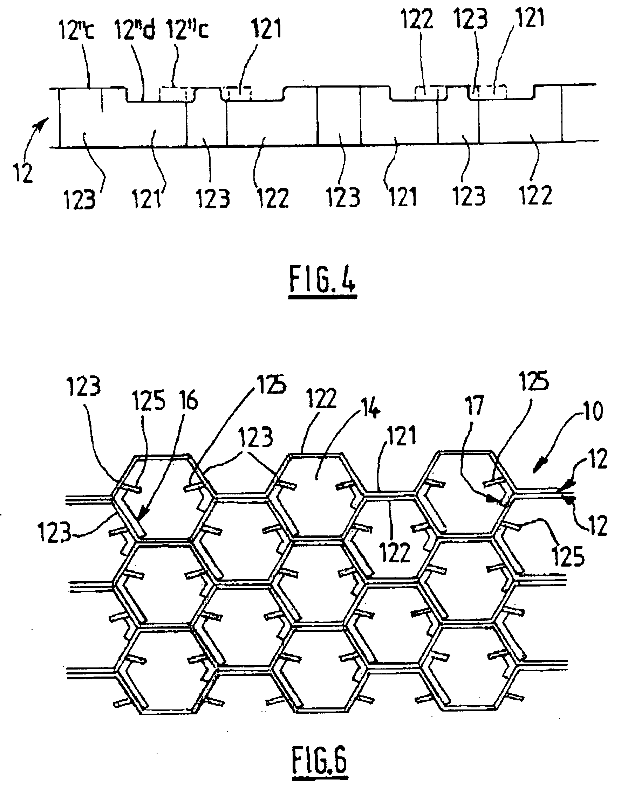

Les premières portions 121 de chaque bande présentent ainsi une hauteur h inférieure à la hauteur H des deuxièmes portions 122 de chaque bande (voir aussi figure 4).

La différence H-h entre les tronçons hauts et bas (12c, 12d) est de 4 à 10 mm, de préférence de 6 à 8 mm.

Le bord longitudinal supérieur 12b de chaque bande 12 présente des jonctions arrondies 124 entre les tronçons hauts 12c et les tronçons bas 12d.

Les bandes 12 représentées comportent également des languettes de matière 125 découpées dans chaque troisième portion 123 de bande. Ces languettes 125 sont repliées par rapport à ladite troisième portion afin de saillir de celle-ci et de former un ancrage supplémentaire pour le matériau composite qui recouvrira ensuite la structure d'ancrage 10. La languette 125 ainsi repliée libère son orifice de découpe 126. Ces languettes 125 sont repliées de manière à s'étendre sensiblement parallèlement aux plans des premières et deuxièmes portions de bande 121, 122. En outre, les languettes 125 de deux troisièmes portions 123 d'une même bande séparées par une première portion 121 sont repliées l'une vers l'autre.

Dans l'exemple représenté, les moyens de fixation des bandes 12 entre elles comprennent deux languettes 127 par deuxième portion 122 formées par découpe dans ces deuxièmes portions 122, et un orifice 128 correspondant des premières portions 121. La fixation des bandes 12 est ainsi réalisée très simplement en introduisant les languettes 127 des deuxièmes portions 122 dans les orifices 128 correspondants des premières portions 121, puis en repliant les languettes 127 contre ces premières portions 121.

En variante, chaque languette 127 pourrait être introduite dans un orifice correspondant ou une seule languette 127 pourrait être prévue par deuxième portion 122. Les languettes 127 et les orifices 128 peuvent être disposés indifféremment sur les premières ou deuxièmes portions de bande.

D'autres moyens de réalisation pourraient être envisagés, tels que des agrafes ou rivets traversant des orifices correspondants des premières et deuxièmes portions.

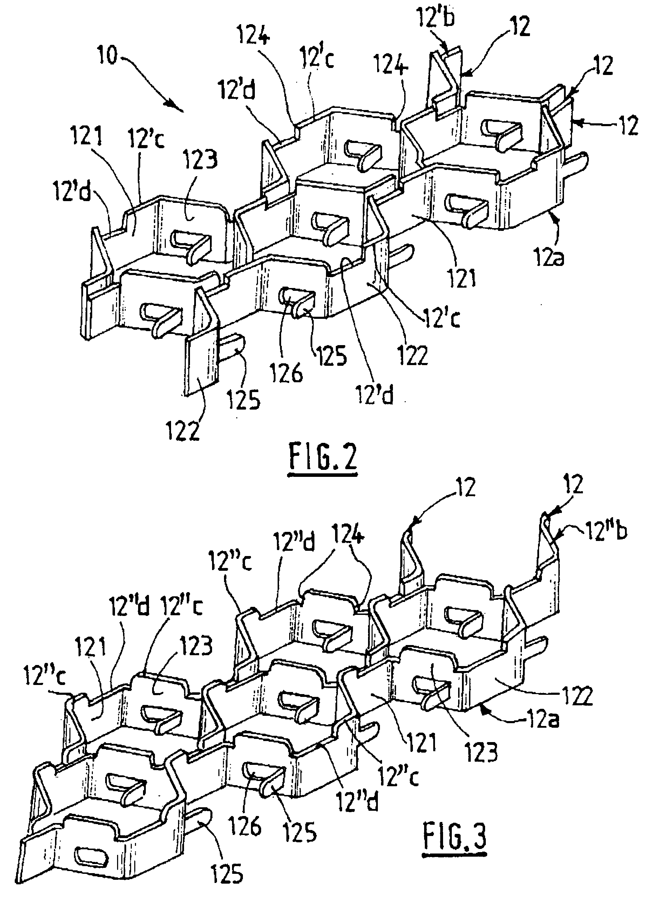

La figure 2 représente un deuxième mode de réalisation qui ne diffère de celui représenté sur la figure 1 que par la répartition des tronçons hauts 12'c et des tronçons bas 12'd le long du bord longitudinal supérieur 12b'. Les autres références désignent des éléments identiques à ceux représentés sur la figure 1. Dans cet exemple, le bord longitudinal supérieur de chaque première portion 121 et de chaque deuxième portion 122 d'une bande est formé d'un tronçon haut 12'c et d'un tronçon bas 12'd présentant chacun la même longueur.

Le bord longitudinal supérieur des troisièmes portions 123 est distant du bord longitudinal d'une même distance H que les tronçons hauts 12'c.

La différence H-h entre les tronçons hauts et bas (12'c ; 12'd) est de 4 à 10 mm, de préférence de 6 à 8 mm.

La figure 3 représente un troisième mode de réalisation qui ne diffère de celui représenté sur la figure 1 que par la répartition des tronçons hauts 12"c et des tronçons bas 12"d le long du bord longitudinal supérieur 12b". Les autres références désignent des éléments identiques à ceux représentés sur la figure 1. Dans cet exemple, le bord longitudinal supérieur de chaque première portion 121 et de chaque deuxième portion 122 d'une bande est formé d'un tronçon haut 12"c et d'un tronçon bas 12"d présentant des longueurs différentes. Ainsi, lorsque les bandes sont assemblées, le tronçon haut 12"c d'une première portion 121 d'une bande est distant du tronçon haut 12"c de la deuxième portion 122 d'une bande adjacente jointive de la première portion 121, suivant la direction longitudinale d'une bande, tel que visible sur la figure 4.

La partie centrale du bord longitudinal supérieur des troisièmes portions 123 est distant du bord longitudinal d'une même distance H que les tronçons hauts 12"c.

La différence H-h entre les tronçons hauts et bas (12"c ; 12"d) est de 4 à 10 mm, de préférence de 6 à 8 mm.

Les moyens de fixation entre les portions d'assemblage 121 et 122 de deux bandes adjacentes 12 ne sont pas représentés sur les figures 2 et 3, mais sont par exemple identiques à ceux décrits en référence à la figure 1.

La figure 4 représente une vue de côté des bandes 12 formant la structure d'ancrage représentée figure 3, l'une des bandes 12 étant représentée en traits pleins, une autre bande 12 adjacente étant représentée en traits tiretés.

La figure 5 représente une vue en coupe transversale d'une structure d'ancrage 10 fixée sur une paroi métallique 20 et noyée dans un matériau composite 22. La hauteur de matériau composite 22 est sensiblement égale à la distance H séparant les tronçons hauts 12c, respectivement 12'c ou 12"c, du bord longitudinal inférieur 12a. Le revêtement ainsi obtenu recouvre entièrement les portions de hauteur H et l'interstice entre les premières 121 et deuxièmes 122 portions de bande assemblées, et ce quelque soit le mode de réalisation.

La structure d'ancrage 10 pourra être fixée à la paroi métallique 20 par soudure.

Une paroi interne ou externe d'une enceinte d'unité de craquage catalytique fluide, peut ainsi être protégée en procédant de la manière suivante :
- (i) mise en forme d'une structure d'ancrage 10 en nid d'abeille de manière à ce que les bords longitudinaux inférieurs 12a des bandes 12 cette structure d'ancrage 10 puissent épouser la forme de la paroi métallique 20,
- (ii) fixation de la structure d'ancrage 10 sur la paroi métallique 20, les bords longitudinaux inférieurs 12a des bandes 12 étant en contact avec la paroi métallique 20,
- (iii) insertion du matériau composite 22 dans les alvéoles 14 de la structure d'ancrage 10 depuis la paroi métallique 20 et au moins jusqu'aux tronçons hauts 12c (ou 12'c ou 12"c) des bords longitudinaux supérieurs 12b de la structure d'ancrage.

En particulier, la paroi métallique 20 pourra être une paroi d'un cyclone, d'un régénérateur ou d'un désengageur ou de tout autre équipement interne d'une unité de craquage catalytique fluide.

De manière générale, pour sa fixation, la structure d'ancrage 10 peut être soudée en multipoints sur la paroi métallique 20 à protéger de façon à revêtir l'ensemble de cette paroi métallique. On ancre ainsi la structure sur la paroi métallique par une série de soudures des alvéoles.

La figure 6 représente un schéma de soudure pouvant résulter de l'étape (ii) de fixation du procédé de réalisation selon l'invention. Selon le schéma représenté, au moins une partie des bords longitudinaux inférieurs 12a des bandes est soudée à la paroi métallique 20 de sorte que chaque alvéole 14 soit soudée individuellement à la paroi métallique 20.

Dans l'exemple représenté, chaque alvéole 14 est soudée à la paroi par deux soudures 16, 17. Ces soudures 16, 17 sont situées aux jonctions entre des troisièmes portions 123 de deux bandes 12 adjacentes. L'une des soudures 16 s'étend sur toute la longueur d'une troisième portion 123 jusqu'à une languette 125 de la troisième portion 123 de la bande adjacente. L'autre soudure 17 s'étend sur l'une des troisièmes portions jusqu'à la languette 125 de celle-ci et sur l'autre des troisièmes portions jusqu'au bord de l'orifice 126 libéré par la découpe de la languette 125 (cet orifice 126 n'est pas représenté sur la figure 4). Ainsi, lorsque l'orifice 126 libéré par la languette 125 est centré au milieu de la troisième portion de bande (tel que représenté sur les figures), cette soudure 17 s'étend sur une même longueur de chaque troisième portion 123 de bande.

La longueur des soudures 16, 17 peut être différente des longueurs décrites en référence à la figure 5, pourvu que la jonction entre des portions d'assemblage jointives 121, 122 de deux bandes adjacentes et la paroi métallique 20 soit recouverte de soudure.

## Revendications

1. Procédé de réalisation d'un revêtement anti érosion sur une paroi métallique (20) interne ou externe d'une enceinte d'unité de craquage catalytique fluide, comprenant :
- (i) la mise en forme d'une structure d'ancrage (10) métallique en nid d'abeille, ladite structure d'ancrage (10) étant formée d'une pluralité de bandes (12) assemblées deux à deux de manière à former une pluralité d'alvéoles (14) entre deux bandes adjacentes, dans laquelle chaque bande (12) est divisée suivant sa longueur en une pluralité de portions, dont au moins une série de portions d'assemblage (121, 122) s'étendant dans un même plan et assemblées à une série de portions d'assemblage d'une bande adjacente par des moyens de fixation, chaque bande (12) présentant un bord longitudinal inférieur (12a) contenu dans un unique plan avant mise en forme et un bord longitudinal supérieur (12b, 12'b, 12 "b), lors de cette étape de mise en forme, les bords longitudinaux inférieurs (12a) des bandes (12) de ladite structure d'ancrage (10) étant conformés pour épouser la forme de ladite paroi métallique (20),
- (ii) la fixation de ladite structure d'ancrage (10) sur ladite paroi métallique (20), les bords longitudinaux inférieurs (12a) des bandes (12) de la structure d'ancrage (10) étant en contact avec la paroi métallique (20), cette fixation étant réalisée par soudage sur la paroi métallique (20) d'au moins une partie des bords longitudinaux inférieurs (12a) des bandes (12) de sorte que chaque alvéole (14) de la structure d'ancrage (10) soit soudée à la paroi métallique (20) au moins aux jonctions entre les portions d'assemblage (121, 122) jointives de deux bandes (12) adjacentes,
- (iii) l'insertion d'un matériau composite (22) dans les alvéoles (14) de ladite structure d'ancrage (10) depuis la paroi métallique (20) et au moins jusqu'au bord longitudinal supérieur (12b) de chaque bande.

2. Procédé de réalisation d'un revêtement anti érosion selon la revendication 1, dans lequel au moins une des soudures (16, 17) réalisées au cours de l'étape (ii) à la jonction des portions d'assemblage (121, 122) jointives de deux bandes (12) adjacentes, s'étend sur toute la longueur d'au moins une des portions de bande (123) adjacente aux portions d'assemblage (121, 122).

3. Procédé de réalisation d'un revêtement anti érosion selon l'une des revendications 1 ou 2, dans lequel les bandes de la structure d'ancrage utilisée à l'étape (i) sont en acier inoxydable austénitique choisi parmi les aciers suivants :
- un acier inoxydable contenant de 0,04 à 0,10% en poids de carbone, de 17 à 19% de chrome et de 9 à 12% de nickel, et avec une teneur en niobium comprise de 8 fois la teneur en carbone à 1% en poids,
- un acier contenant au plus 0,015% en poids de carbone, de 15 à 17% de chrome et de 33 à 37% de nickel,
- un acier contenant au plus 0,10% en poids de carbone, de 24 à 26% de chrome et de 19 à 22% de nickel.

4. Procédé de réalisation d'un revêtement anti érosion selon l'une des revendications 1 à 3, dans lequel
- la structure d'ancrage utilisée à l'étape (i) est telle que le bord longitudinal supérieur (12b, 12'b, 12 "b) de chaque bande (12) est formé d'une succession de tronçons (12c, 12'c, 12"c, 12d, 12'd, 12"d) rectilignes et parallèles au bord longitudinal inférieur (12a), le bord longitudinal supérieur (12b, 12'b, 12 "b) comprenant en alternance des tronçons bas (12d, 12'd, 12"d) distants du bord longitudinal inférieur (12a) d'une distance h et des tronçons hauts (12c, 12'c, 12"c) distants du bord longitudinal inférieur (12a) d'une distance H supérieure à la distance h, au moins une partie des tronçons bas (12d, 12'd, 12"d) formant le bord supérieur (12b, 12'b, 12 "b) d'une partie au moins des portions d'assemblage (121, 122) de telle sorte que, lorsque deux bandes adjacentes sont assemblées, chaque portion d'assemblage d'une bande comporte un bord longitudinal supérieur (12b, 12'b, 12 "b) distant de son bord longitudinal inférieur (12a) d'une distance différente de la distance séparant le bord longitudinal supérieur (12b, 12'b, 12 "b) du bord longitudinal inférieur (12a) de la portion d'assemblage de la bande adjacente à laquelle elle est assemblée, sur toute la longueur des portions d'assemblage assemblées, et dans lequel
- au cours de l'étape d'insertion (iii) du matériau composite (22) dans les alvéoles (14) de ladite structure d'ancrage (10), le matériau composite remplit les alvéoles depuis la paroi métallique (20) et au moins jusqu'aux tronçons hauts (12c, 12'c, 12"c) des bords longitudinaux supérieurs (12b, 12'b, 12 "b) des bandes de la structure d'ancrage.

5. Procédé de réalisation d'un revêtement anti érosion selon la revendication 4, dans lequel chaque bande de la structure d'ancrage utilisée à l'étape (i) est telle que la différence H-h entre les distances H et h est de 4 à 10 mm, de préférence de 6 à 8 mm.

6. Procédé de réalisation d'un revêtement anti érosion selon la revendication 1 à 5, dans lequel la paroi métallique (20) est une paroi externe ou interne d'un cyclone, d'un régénérateur, d'un désengageur ou de tout autre équipement interne d'une unité de craquage catalytique fluide.

7. Procédé de réalisation d'un revêtement anti érosion selon la l'une des revendications 1 à 6, dans lequel le matériau composite (22) est un béton.

8. Procédé de réalisation d'un revêtement anti érosion selon l'une des revendications 1 à 7, dans lequel chaque bande de la structure d'ancrage utilisée à l'étape (i) est divisée suivant sa longueur en une pluralité de portions (121, 122, 123), des premières portions (121) de bande s'étendant dans un premier plan parallèle à la direction longitudinale (L) de la bande, des deuxièmes portions (122) de bande s'étendant dans un deuxième plan parallèle au premier plan et distinct du premier plan, des troisièmes portions (123) de bande reliant chacune une première portion (121) de bande à une deuxième portion (122) de bande, les premières et deuxièmes portions (121, 122) de bande étant alternées sur toute la longueur de la bande (12) et les premières portions (121) d'une bande étant juxtaposées et assemblées aux deuxièmes portions (122) d'une bande adjacente par des moyens de fixation de manière à former des alvéoles hexagonales (14).

9. Structure d'ancrage (10) métallique en nid d'abeille pour la réalisation d'un revêtement anti érosion sur une paroi métallique (20) interne ou externe d'une enceinte d'unité de craquage catalytique fluide, ladite structure d'ancrage (10) étant formée d'une pluralité de bandes (12) identiques assemblées deux à deux de manière à former une pluralité d'alvéoles (14) entre deux bandes adjacentes, dans laquelle chaque bande (12) est divisée suivant sa longueur en une pluralité de portions, dont au moins une série de portions d'assemblage s'étendant dans un même plan et assemblées à une série de portions d'assemblage d'une bande adjacente par des moyens de fixation, chaque bande (12) présentant un bord longitudinal inférieur (12a) contenu dans un unique plan et un bord longitudinal supérieur (12b, 12'b, 12 "b), le bord longitudinal supérieur (12b, 12'b, 12 "b) de chaque bande (12) étant formé d'une succession de tronçons (12c, 12'c, 12"c, 12d, 12'd, 12"d) rectilignes et parallèles au bord longitudinal inférieur (12a), le bord longitudinal supérieur (12b, 12'b, 12 "b) comprenant en alternance des tronçons bas (12d, 12'd, 12"d) distants du bord longitudinal inférieur (12a) d'une distance h et des tronçons hauts (12c, 12'c, 12"c) distants du bord longitudinal inférieur (12a) d'une distance H supérieure à la distance h, au moins une partie des tronçons bas (12d, 12'd, 12"d) formant le bord supérieur (12b, 12'b, 12 "b) d'une partie au moins des portions d'assemblage (121, 122) de telle sorte que, lorsque deux bandes adjacentes sont assemblées, chaque portion d'assemblage d'une bande comporte un bord longitudinal supérieur (12b, 12'b, 12 "b) distant de son bord longitudinal inférieur (12a) d'une distance différente de la distance séparant le bord longitudinal supérieur (12b, 12'b, 12 "b) du bord longitudinal inférieur (12a) de la portion d'assemblage de la bande adjacente à laquelle elle est assemblée, sur toute la longueur des portions d'assemblage assemblées.

10. Structure d'ancrage (10) selon la revendication 9, **caractérisée en ce que** chaque bande de la structure d'ancrage est divisée suivant sa longueur en une pluralité de portions (121, 122, 123), des premières portions (121) de bande s'étendant dans un premier plan parallèle à la direction longitudinale (L) de la bande, des deuxièmes portions (122) de bande s'étendant dans un deuxième plan parallèle au premier plan et distinct du premier plan, des troisièmes portions (123) de bande reliant chacune une première portion (121) de bande à une deuxième portion (122) de bande, les premières et deuxièmes portions (121, 122) de bande étant alternées sur toute la longueur de la bande (12) et les premières portions (121) d'une bande étant juxtaposées et assemblées aux deuxièmes portions (122) d'une bande adjacente par des moyens de fixation de manière à former des alvéoles hexagonales (14).

11. Structure d'ancrage (10) selon la revendication 10, **caractérisée en ce que** les tronçons bas (12d) s'étendent sur toute la longueur de chaque première portion (121) et les tronçons hauts (12c) s'étendent sur toute la longueur de chaque deuxième portion (122), toutes les bandes de la structure d'ancrage étant identiques.

12. Structure d'ancrage (10) selon l'une des revendications 9 à 11, **caractérisée en ce qu'**elle comprend au moins une des caractéristiques suivantes :
- le le bord longitudinal supérieur de chaque portion d'assemblage (121, 122) de deux bandes adjacentes est identique et formé d'une succession d'au moins un tronçon haut (12'c, 12"c) et d'au moins un tronçon bas (12'd, 12"d),
- le bord longitudinal supérieur des portions (123) de bande situées entre les portions d'assemblage est distant du bord longitudinal inférieur (12a) de la distance H,
- le bord longitudinal supérieur (12b, 12'b, 12 "b) de chaque bande (12) présente des jonctions arrondies (124) entre les tronçons hauts (12c, 12'c, 12"c) et les tronçons bas (12d, 12'd, 12"d),
- la différence H-h entre les distances H et h est de 4 à 10 mm, de préférence de 6 à 8 mm.

13. Structure d'ancrage (10) en nid d'abeille selon l'une des revendications 9 à 12, **caractérisée en ce que** les bandes sont en acier inoxydable austénitique choisi parmi les aciers suivants :
- un acier inoxydable contenant de 0,04 à 0,10% en poids de carbone, de 17 à 19% de chrome et de 9 à 12% de nickel, et avec une teneur en niobium comprise de 8 fois la teneur en carbone à 1% en poids,
- un acier contenant au plus 0,015% en poids de carbone, de 15 à 17% de chrome et de 33 à 37% de nickel,
- un acier contenant au plus 0,10% en poids de carbone, de 24 à 26% de chrome et de 19 à 22% de nickel.

14. Revêtement anti érosion **caractérisé en ce qu'**il comprend une structure d'ancrage (10) en nid d'abeille selon l'une des revendications 9 à 13 noyée dans un matériau composite (22), par exemple un béton, le matériau composite remplissant chaque alvéole (14) depuis le bord longitudinal inférieur (12a) de chaque bande (12) jusqu'au bord longitudinal supérieur (12b, 12'b, 12 "b) sur une distance au moins égale à la distance H séparant les tronçons hauts (12c, 12'c, 12"c) du bord longitudinal inférieur (12a).

15. Enceinte d'une unité de craquage catalytique fluide **caractérisée en ce qu'**elle comprend comprenant au moins une paroi (20) interne ou externe recouverte d'au moins un revêtement selon la revendication 14, le bord longitudinal inférieur (12a) de chaque bande (12) de la structure d'ancrage (10) du revêtement étant fixé par soudage sur la paroi (20) interne ou externe de l'enceinte.

## Patentansprüche

1. Verfahren zur Herstellung einer Erosionsschutzbeschichtung auf einer metallischen Innen- oder Außenwand (20) einer Verbrennungskammer einer Fluid-Catalytic-Cracking-Anlage, das Folgendes umfasst:
- (i) Formgeben einer wabenförmigen metallischen Verankerungsstruktur (10), wobei die Verankerungsstruktur (10) aus einer Vielzahl Bänder (12) gebildet ist, von denen jeweils zwei derart zusammengefügt werden, dass eine Vielzahl Zellen (14) zwischen zwei benachbarten Bändern gebildet werden, wobei jedes Band (12) entlang seiner Länge in eine Vielzahl Abschnitte geteilt ist, von denen mindestens eine Reihe von Zusammenfügungsabschnitten (121, 122) sich in einer gleichen Ebene erstrecken und durch Befestigungsmittel mit einer Reihe von Zusammenfügungsabschnitten eines benachbarten Bandes zusammengefügt werden, wobei jedes Band (12) einen unteren Längsrand (12a), der vor der Formgebung in einer einzigen Ebene enthalten ist, und einen oberen Längsrand (12b, 12'b, 12"b) aufweist, wobei bei diesem Formgebungsschritt die unteren Längsränder (12a) der Bänder (12) der Verankerungsstruktur (10) angepasst sind, um sich an die Form der metallischen Wand (20) anzupassen,
- (ii) Befestigen der Verankerungsstruktur (10) an der metallischen Wand (20), wobei die unteren Längsränder (12a) der Bänder (12) der Verankerungsstruktur (10) mit der metallischen Wand (20) in Berührung stehen, wobei das Befestigen durch Schweißen von mindestens einem Teil der unteren Längsränder (12a) der Bänder (12) an die metallische Wand (20) ausgeführt wird, derart, dass jede Zelle (14) der Verankerungsstruktur (10) zumindest an den Verbindungsstellen zwischen den aneinanderstoßenden Zusammenfügungsabschnitten (121, 122) von zwei benachbarten Bändern (12) an die metallische Wand (20) geschweißt wird,
- (iii) Einbringen eines Verbundwerkstoffs (22) in die Zellen (14) der Verankerungsstruktur (10) ab der metallischen Wand (20) und mindestens bis zum oberen Längsrand (12b) jedes Bandes.

2. Verfahren zur Herstellung einer Erosionsschutzbeschichtung nach Anspruch 1, wobei mindestens eine der Schweißungen (16, 17), die während des Schrittes (ii) an der Verbindungsstelle der aneinanderstoßenden Zusammenfügungsabschnitte (121, 122) von zwei benachbarten Bändern (12) hergestellt werden, sich über die gesamte Länge von mindestens einem der Bandabschnitte (123) erstreckt, der den Zusammenfügungsabschnitten (121, 122) benachbart ist.

3. Verfahren zur Herstellung einer Erosionsschutzbeschichtung nach einem der Ansprüche 1 oder 2, wobei die Bänder der Verankerungsstruktur, die im Schritt (i) verwendet wird, aus austenitischem rostfreiem Stahl hergestellt werden, der unter den folgenden Stählen ausgewählt wird:
- einem rostfreien Stahl, der zwischen 0,04 und 0,10 Gew.-% Kohlenstoff, zwischen 17 und 19 % Chrom und zwischen 9 und 12 % Nickel enthält, und mit einem Niobgehalt, der zwischen dem 8-fachen des Kohlenstoffgehalts und 1 Gew.-% enthalten ist,
- einem Stahl, der höchstens 0,015 Gew.-% Kohlenstoff, zwischen 15 und 17 % Chrom und zwischen 33 und 37 % Nickel enthält,
- einem Stahl, der höchstens 0,10 Gew.-% Kohlenstoff, zwischen 24 und 26 % Chrom und zwischen 19 und 22 % Nickel enthält.

4. Verfahren zur Herstellung einer Erosionsschutzbeschichtung nach einem der Ansprüche 1 bis 3, wobei:
- die im Schritt (i) verwendete Verankerungsstruktur derart ist, dass der obere Längsrand (12b, 12'b, 12"b) von jedem Band (12) aus einer Folge von Teilstücken (12c, 12'c, 12"c, 12d, 12'd, 12"d) gebildet ist, die geradlinig und parallel zum unteren Längsrand (12a) sind, wobei der obere Längsrand (12b, 12'b, 12"b) einen Wechsel der niedrigen Teilstücke (12d, 12'd, 12"d), die vom unteren Längsrand (12a) um einen Abstand h beabstandet sind, und der hohen Teilstücke (12c, 12'c, 12"c) umfasst, die von dem unteren Längsrand (12a) um einen Abstand H beabstandet sind, der größer ist als der Abstand h, wobei zumindest ein Teil der niedrigen Teilstücke (12d, 12'd, 12"d) den oberen Rand (12b, 12'b, 12"b) von zumindest einem Teil der Zusammenfügungsabschnitte (121, 122) bildet, derart, dass, wenn zwei benachbarte Bänder zusammengefügt werden, jeder Zusammenfügungsabschnitt eines Bandes einen oberen Längsrand (12b, 12'b, 12"b) umfasst, der von seinem unteren Längsrand (12a) um einen Abstand beabstandet ist, der sich von dem Abstand, der den oberen Längsrand (12b, 12'b, 12"b) von dem unteren Längsrand (12a) des Zusammenfügungsabschnitts des benachbarten Bandes trennt, mit dem er zusammengefügt wird, über die gesamte Länge der zusammengefügten Zusammenfügungsabschnitte unterscheidet, und wobei
- während des Schrittes des Einbringens (iii) des Verbundwerkstoffes (22) in die Zellen (14) der Verankerungsstruktur (10) der Verbundwerkstoff die Zellen ab der metallischen Wand (20) und mindestens bis zu den hohen Teilstücken (12c, 12'c, 12"c) der oberen Längsränder (12b, 12'b, 12"b) der Bänder der Verankerungsstruktur füllt.

5. Verfahren zur Herstellung einer Erosionsschutzbeschichtung nach Anspruch 4, wobei jedes Band der Verankerungsstruktur, die im Schritt (i) verwendet wird, derart ist, dass die Differenz H-h zwischen den Abständen H und h zwischen 4 und 10 mm, vorzugsweise zwischen 6 und 8 mm, beträgt.

6. Verfahren zur Herstellung einer Erosionsschutzbeschichtung nach Anspruch 1 bis 5, wobei die metallische Wand (20) eine Außen- oder Innenwand eines Zyklonabscheiders, eines Regenerators, einer Trennvorrichtung oder jeder anderen Innenausrüstung einer Fluid-Catalytic-Cracking-Anlage ist.

7. Verfahren zur Herstellung einer Erosionsschutzbeschichtung nach einem der Ansprüche 1 bis 6, wobei der Verbundwerkstoff (22) ein Beton ist.

8. Verfahren zur Herstellung einer Erosionsschutzbeschichtung nach einem der Ansprüche 1 bis 7, wobei jedes Band der Verankerungsstruktur, die im Schritt (i) verwendet wird, entlang seiner Länge in eine Vielzahl Abschnitte (121, 122, 123) geteilt ist, wobei erste Bandabschnitte (121) sich in einer ersten Ebene parallel zur Längsrichtung (L) des Bandes erstrecken, zweite Bandabschnitte (122) sich in einer zweiten Ebene erstrecken, die parallel zur ersten Ebene ist und sich von der ersten Ebene unterscheidet, dritte Bandabschnitte (123) jeweils einen ersten Bandabschnitt (121) mit einem zweiten Bandabschnitt (122) verbinden, die ersten und zweiten Bandabschnitte (121, 122) sich über die gesamte Länge des Bandes (12) abwechseln und die ersten Abschnitte (121) eines Bandes derart neben die zweiten Abschnitte (122) eines benachbarten Bandes gelegt und durch Befestigungsmittel damit zusammengefügt werden, dass sechseckige Zellen (14) gebildet werden.

9. Wabenförmige metallische Verankerungsstruktur (10) für die Herstellung einer Erosionsschutzbeschichtung auf einer metallischen Innen- oder Außenwand (20) einer Verbrennungskammer einer Fluid-Catalytic-Cracking-Anlage, wobei die Verankerungsstruktur (10) aus einer Vielzahl identischen Bändern (12) gebildet ist, von denen jeweils zwei derart zusammengefügt sind, dass eine Vielzahl Zellen (14) zwischen zwei benachbarten Bändern gebildet sind, wobei jedes Band (12) entlang seiner Länge in eine Vielzahl Abschnitte geteilt ist, von denen mindestens eine Reihe von Zusammenfügungsabschnitten sich in einer gleichen Ebene erstrecken und durch Befestigungsmittel mit einer Reihe von Zusammenfügungsabschnitten eines benachbarten Bandes zusammengefügt sind, wobei jedes Band (12) einen unteren Längsrand (12a), der in einer einzigen Ebene enthalten ist, und einen oberen Längsrand (12b, 12'b, 12"b) aufweist, wobei der obere Längsrand (12b, 12'b, 12"b) von jedem Band (12) aus einer Folge von Teilstücken (12c, 12'c, 12"c, 12d, 12'd, 12"d) besteht, die geradlinig und parallel zum unteren Längsrand (12a) sind, wobei der obere Längsrand (12b, 12'b, 12"b) einen Wechsel der niedrigen Teilstücke (12d, 12'd, 12"d), die vom unteren Längsrand (12a) um einen Abstand h beabstandet sind, und hohen Teilstücken (12c, 12'c, 12"c) umfasst, die von dem unteren Längsrand (12a) um einen Abstand H beabstandet sind, der größer ist als der Abstand h, wobei zumindest ein Teil der niedrigen Teilstücke (12d, 12'd, 12"d) den oberen Rand (12b, 12'b, 12"b) von zumindest einem Teil der Zusammenfügungsabschnitte (121, 122) bildet, derart, dass, wenn zwei benachbarte Bänder zusammengefügt werden, jeder Zusammenfügungsabschnitt eines Bandes einen oberen Längsrand (12b, 12'b, 12"b) umfasst, der von seinem unteren Längsrand (12a) um einen Abstand beabstandet ist, der sich von dem Abstand, der den oberen Längsrand (12b, 12'b, 12"b) von dem unteren Längsrand (12a) des Zusammenfügungsabschnitts des benachbarten Bandes trennt, mit dem er zusammengefügt wird, über die gesamte Länge der zusammengefügten Zusammenfügungsabschnitte unterscheidet.

10. Verankerungsstruktur (10) nach Anspruch 9, **dadurch gekennzeichnet, dass** jedes Band der Verankerungsstruktur entlang seiner Länge in eine Vielzahl Abschnitte (121, 122, 123) geteilt ist, wobei erste Bandabschnitte (121) sich in einer ersten Ebene parallel zur Längsrichtung (L) des Bandes erstrecken, zweite Bandabschnitte (122) sich in einer zweiten Ebene erstrecken, die parallel zur ersten Ebene ist und sich von der ersten Ebene unterscheidet, dritte Bandabschnitte (123) jeweils einen ersten Bandabschnitt (121) mit einem zweiten Bandabschnitt (122) verbinden, die ersten und zweiten Bandabschnitte (121, 122) sich über die gesamte Länge des Bandes (12) abwechseln und die ersten Abschnitte (121) eines Bandes derart neben die zweiten Abschnitte (122) eines benachbarten Bandes gelegt und durch Befestigungsmittel damit zusammengefügt werden, dass sechseckige Zellen (14) gebildet werden.

11. Verankerungsstruktur (10) nach Anspruch 10, **dadurch gekennzeichnet, dass** die niedrigen Teilstücke (12d) sich über die gesamte Länge von jedem ersten Abschnitt (121) erstrecken und die hohen Teilstücke (12c) sich über die gesamte Länge von jedem zweiten Abschnitt (122) erstrecken, wobei alle Bänder der Verankerungsstruktur identisch sind.

12. Verankerungsstruktur (10) nach einem der Ansprüche 9 bis 11, **dadurch gekennzeichnet, dass** sie mindestens eines der folgenden Merkmale umfasst:
- der obere Längsrand von jedem Zusammenfügungsabschnitt (121, 122) von zwei benachbarten Bändern ist identisch und aus einer Folge von mindestens einem hohen Teilstück (12'c, 12"c) und mindestens einem niedrigen Teilstück (12'd, 12"d) gebildet,
- der obere Längsrand der Bandabschnitte (123), die sich zwischen den Zusammenfügungsabschnitten befinden, ist von dem unteren Längsrand (12a) um den Abstand H beabstandet,
- der obere Längsrand (12b, 12'b, 12"b) von jedem Band (12) weist abgerundete Verbindungsstellen (124) zwischen den hohen Teilstücken (12c, 12'c, 12"c) und den niedrigen Teilstücken (12d, 12'd, 12"d) auf,
- die Differenz H-h zwischen den Abständen H und h beträgt zwischen 4 bis 10 mm, vorzugsweise zwischen 6 und 8 mm.

13. Wabenförmige Verankerungsstruktur (10) nach einem der Ansprüche 9 bis 12, **dadurch gekennzeichnet, dass** die Bänder aus austenitischem rostfreiem Stahl hergestellt sind, der unter den folgenden Stählen ausgewählt ist:
- einem rostfreien Stahl, der zwischen 0,04 und 0,10 Gew.-% Kohlenstoff, zwischen 17 und 19 % Chrom und zwischen 9 und 12 % Nickel enthält, und mit einem Niobgehalt, der zwischen dem 8-fachen des Kohlenstoffgehalts und 1 Gew.-% enthalten ist,
- einem Stahl, der höchstens 0,015 Gew.-% Kohlenstoff, zwischen 15 und 17 % Chrom und zwischen 33 und 37 % Nickel enthält,
- einem Stahl, der höchstens 0,10 Gew.-% Kohlenstoff, zwischen 24 und 26 % Chrom und zwischen 19 und 22 % Nickel enthält.

14. Erosionsschutzbeschichtung, **dadurch gekennzeichnet, dass** sie eine wabenförmige Verankerungsstruktur (10) nach einem der Ansprüche 9 bis 13 umfasst, die in einem Verbundwerkstoff (22), zum Beispiel einem Beton, versenkt ist, wobei der Verbundwerkstoff jede Zelle (14) ab dem unteren Längsrand (12a) von jedem Band (12) bis zum oberen Längsrand (12b, 12'b, 12"b) über einen Abstand füllt, der mindestens gleich dem Abstand H ist, der die hohen Teilstücke (12c, 12'c, 12"c) von dem unteren Längsrand (12a) trennt.

15. Verbrennungskammer einer Fluid-Catalytic-Cracking-Anlage, **dadurch gekennzeichnet, dass** sie mindestens eine Innen- oder Außenwand (20) umfasst, die durch mindestens eine Beschichtung nach Anspruch 14 bedeckt ist, wobei der untere Längsrand (12a) von jedem Band (12) der Verankerungsstruktur (10) der Beschichtung durch Schweißen an der Innen- oder Außenwand (20) der Verbrennungskammer befestigt ist.

## Claims

1. Process for producing an anti-erosion coating on an inner or outer metal wall (20) of a chamber of a fluid catalytic cracking unit, comprising:
- (i) the shaping of a honeycomb metal anchoring structure (10), said anchoring structure (10) being formed from a plurality of strips (12) connected in pairs so as to form a plurality of cells (14) between two adjacent strips, in which each strip (12) is divided along its length into a plurality of portions, including at least one series of assembly portions (121, 122) extending in a same plane and connected to a series of assembly portions of an adjacent strip by fastening means, each strip (12) having a lower longitudinal edge (12a) contained in a single plane before shaping and an upper longitudinal edge (12b, 12'b, 12"b), during this shaping step, the lower longitudinal edges (12a) of the strips (12) of said anchoring structure (10) being adapted in order to follow the shape of said metal wall (20),
- (ii) the fastening of said anchoring structure (10) to said metal wall (20), the lower longitudinal edges (12a) of the strips (12) of the anchoring structure (10) being in contact with the metal wall (20), this fastening being carried out by welding to the metal wall (20) of at least one part of the lower longitudinal edges (12a) of the strips (12) so that each cell (14) of the anchoring structure (10) is welded to the metal wall (20) at least at the junctions between the contiguous assembly portions (121, 122) of two adjacent strips (12),
- (iii) the insertion of a composite material (22) into the cells (14) of said anchoring structure (10) from the metal wall (20) and at least up to the upper longitudinal edge (12b) of each strip.

2. Process for producing an anti-erosion coating according to Claim 1, in which at least one of the welds (16, 17) produced during step (ii) at the junction of the contiguous assembly portions (121, 122) of two adjacent strips (12) extends over the entire length of at least one of the strip portions (123) adjacent to the assembly portions (121, 122).

3. Process for producing an anti-erosion coating according to either of Claims 1 and 2, in which the strips of the anchoring structure used in step (i) are made of austenitic stainless steel chosen from the following steels:
- a stainless steel containing from 0.04% to 0.10% by weight of carbon, from 17% to 19% of chromium and from 9% to 12% of nickel, and with a niobium content of from 8 times the carbon content to 1% by weight,
- a steel containing at most 0.015% by weight of carbon, from 15% to 17% of chromium and from 33% to 37% of nickel,
- a steel containing at most 0.10% by weight of carbon, from 24% to 26% of chromium and from 19% to 22% of nickel.

4. Process for producing an anti-erosion coating according to one of Claims 1 to 3, in which:
- the anchoring structure used in step (i) is such that the upper longitudinal edge (12b, 12'b, 12"b) of each strip (12) is formed from a succession of straight sections (12c, 12'c, 12"c, 12d, 12'd, 12"d) that are parallel to the lower longitudinal edge (12a), the upper longitudinal edge (12b, 12'b, 12"b) alternately comprising low sections (12d, 12'd, 12"d) that are a distance h away from the lower longitudinal edge (12a) and high sections (12c, 12'c, 12"c) that are a distance H, greater than the distance h, away from the lower longitudinal edge (12a), at least one part of the low sections (12d, 12'd, 12"d) forming the upper edge (12b, 12'b, 12"b) of at least one part of the assembly portions (121, 122) so that, when two adjacent strips are connected, each assembly portion of a strip comprises an upper longitudinal edge (12b, 12'b, 12"b) a distance apart from its lower longitudinal edge (12a) that is different from the distance separating the upper longitudinal edge (12b, 12'b, 12"b) from the lower longitudinal edge (12a) of the assembly portion of the adjacent strip to which it is connected, over the entire length of the connected assembly portions, and in which:
- during the step (iii) of inserting the composite material (22) into the cells (14) of said anchoring structure (10), the composite material fills the cells from the metal wall (20) and at least up to the high sections (12c, 12'c, 12"c) of the upper longitudinal edges (12b, 12'b, 12"b) of the strips of the anchoring structure.

5. Process for producing an anti-erosion coating according to Claim 4, in which each strip of the anchoring structure used in step (i) is such that the difference H-h between the distances H and h is from 4 to 10 mm, preferably from 6 to 8 mm.

6. Process for producing an anti-erosion coating according to Claims 1 to 5, in which the metal wall (20) is an outer or inner wall of a cyclone, a regenerator, a disengager or any other internal equipment of a fluid catalytic cracking unit.

7. Process for producing an anti-erosion coating according to one of Claims 1 to 6, in which the composite material (22) is a concrete.

8. Process for producing an anti-erosion coating according to one of Claims 1 to 7, in which each strip of the anchoring structure used in step (i) is divided along its length into a plurality of portions (121, 122, 123), first strip portions (121) extending in a first plane parallel to the longitudinal direction (L) of the strip, second strip portions (122) extending in a second plane parallel to the first plane and different from the first plane, third strip portions (123) each connecting a first strip portion (121) to a second strip portion (122), the first and second strip portions (121, 122) being alternated over the entire length of the strip (12) and the first portions (121) of a strip being juxtaposed and connected to the second portions (122) of an adjacent strip by fastening means so as to form hexagonal cells (14).

9. Honeycomb metal anchoring structure (10) for the production of an anti-erosion coating on an inner or outer metal wall (20) of a chamber of a fluid catalytic cracking unit, said anchoring structure (10) being formed from a plurality of identical strips (12) connected in pairs so as to form a plurality of cells (14) between two adjacent strips, in which each strip (12) is divided along its length into a plurality of portions, including at least one series of assembly portions extending in a same plane and connected to a series of assembly portions of an adjacent strip by fastening means, each strip (12) having a lower longitudinal edge (12a) contained in a single plane and an upper longitudinal edge (12b, 12'b, 12"b), the upper longitudinal edge (12b, 12'b, 12"b) of each strip (12) being formed from a succession of straight sections (12c, 12'c, 12"c, 12d, 12'd, 12"d) that are parallel to the lower longitudinal edge (12a), the upper longitudinal edge (12b, 12'b, 12"b) alternately comprising low sections (12d, 12'd, 12"d) that are a distance h away from the lower longitudinal edge (12a) and high sections (12c, 12'c, 12"c) that are a distance H, greater than the distance h, away from the lower longitudinal edge (12a), at least one part of the low sections (12d, 12'd, 12"d) forming the upper edge (12b, 12'b, 12"b) of at least one part of the assembly portions (121, 122) so that, when two adjacent strips are connected, each assembly portion of a strip comprises an upper longitudinal edge (12b, 12'b, 12"b) a distance apart from its lower longitudinal edge (12a) that is different from the distance separating the upper longitudinal edge (12b, 12'b, 12"b) from the lower longitudinal edge (12a) of the assembly portion of the adjacent strip to which it is connected, over the entire length of the connected assembly portions.

10. Anchoring structure (10) according to Claim 9, **characterized in that** each strip of the anchoring structure is divided along its length into a plurality of portions (121, 122, 123), first strip portions (121) extending in a first plane parallel to the longitudinal direction (L) of the strip, second strip portions (122) extending in a second plane parallel to the first plane and different from the first plane, third strip portions (123) each connecting a first strip portion (121) to a second strip portion (122), the first and second strip portions (121, 122) being alternated over the entire length of the strip (12) and the first portions (121) of a strip being juxtaposed and connected to the second portions (122) of an adjacent strip by fastening means so as to form hexagonal cells (14).

11. Anchoring structure (10) according to Claim 10, **characterized in that** the low sections (12d) extend over the entire length of each first portion (121) and the high sections (12c) extend over the entire length of each second portion (122), all the strips of the anchoring structure being identical.

12. Anchoring structure (10) according to one of Claims 9 to 11, **characterized in that** it comprises at least one of the following characteristics :
- the upper longitudinal edge of each assembly portion (121, 122) of two adjacent strips is identical and is formed from a succession of at least one high section (12'c, 12"c) and at least one low section (12'd, 12"d),
- the upper longitudinal edge of the strip portions (123) located between the assembly portions is a distance H away from the lower longitudinal edge (12a),
- the upper longitudinal edge (12b, 12'b, 12"b) of each strip (12) has rounded junctions (124) between the high sections (12c, 12'c, 12"c) and the low sections (12d, 12'd, 12"d),
- the difference H-h between the distances H and h is from 4 to 10 mm, preferably from 6 to 8 mm.

13. Honeycomb anchoring structure (10) according to one of Claims 9 to 12, **characterized in that** the strips are made of austenitic stainless steel chosen from the following steels:
- a stainless steel containing from 0.04% to 0.10% by weight of carbon, from 17% to 19% of chromium and from 9% to 12% of nickel, and with a niobium content of from 8 times the carbon content to 1% by weight,
- a steel containing at most 0.015% by weight of carbon, from 15% to 17% of chromium and from 33% to 37% of nickel,
- a steel containing at most 0.10% by weight of carbon, from 24% to 26% of chromium and from 19% to 22% of nickel.

14. Anti-erosion coating, **characterized in that** it comprises a honeycomb anchoring structure (10) according to one of Claims 9 to 13 embedded in a composite material (22), for example a concrete, the composite material filling each cell (14) from the lower longitudinal edge (12a) of each strip (12) up to the upper longitudinal edge (12b, 12'b, 12"b) over a distance at least equal to the distance H separating the high sections (12c, 12'c, 12"c) from the lower longitudinal edge (12a).

15. Chamber of a fluid catalytic cracking unit, **characterized in that** it comprises at least one inner or outer wall (20) covered with at least one coating according to Claim 14, the lower longitudinal edge (12a) of each strip (12) of the anchoring structure (10) of the coating being fastened by welding to the inner or outer wall (20) of the chamber.
